Europäisches Patentamt

European Patent Office

Office européen des brevets

(11) Veröffentlichungsnummer: **0 414 000 A2**

# (12) EUROPÄISCHE PATENTANMELDUNG

(21) Anmeldenummer: 90114677.9

(22) Anmeldetag: 31.07.90

(51) Int. Cl.⁵: **G01N 21/31**

(30) Priorität: 25.08.89 DE 3928102

(43) Veröffentlichungstag der Anmeldung:
27.02.91 Patentblatt 91/09

(84) Benannte Vertragsstaaten:
**DE GB IT**

(71) Anmelder: **BODENSEEWERK PERKIN-ELMER GMBH**
**Askaniaweg 4**
**D-7770 Uberlingen/Bodensee(DE)**

(72) Erfinder: **Huber, Bernhard**
**Hildegardring 42**
**D-7770 Überlingen(DE)**

(74) Vertreter: **Wolgast, Rudolf, Dipl.-Chem. Dr. et al**
**Dipl.-Phys. Jürgen Weisse Dipl.Chem. Dr. Rudolf Wolgast Bökenbusch 41 Postfach 11 03 86**
**D-5620 Velbert 11 Langenberg(DE)**

(54) **Vorrichtung und Verfahren zur atomspektroskopischen Analyse flüchtiger Messproben.**

(57) Die flüchtige Meßprobe wird von einem Trägergasstrom aufgenommen, der durch eine Trägergasleitung (1) zu einer atomspektroskopischen Meßanordnung führt. In der Trägergasleitung (1) befinden sich ein Rohrabschnitt (15) mit einer inerten, gasdurchlässigen Füllung (6). Dem Rohrabschnitt (15) ist ein Kühlmantel (16) zugeordnet. Die flüchtige Meßprobe wird an der Füllung (6) ausgefroren und/oder adsorbiert. Anschließend wird die Füllung durch wenigstens einen Infrarotstrahler (19) durch den Kühlmantel (16) hindurch ausgeheizt, wodurch die niedergeschlagene flüchtige Meßprobe verdampft und der atomspektroskopischen Meßanordnung in konzentrierter Form zugeführt wird.

EP 0 414 000 A2

## TECHNISCHES GEBIET

Die Erfindung betrifft eine Vorrichtung zur Überführung einer flüchtigen Meßprobe mittels eines Trägergases in die Meßanordnung eines Atomspektrometers enthaltend eine an eine Trägergasquelle anschließbare Trägergasleitung, die mit der Meßanordnung verbunden ist und durch die hindurch ein Trägergasstrom, der die flüchtige Meßprobe enthält, der Meßanordnung zuführbar ist, einen in der Trägergasleitung enthaltenen Rohrabschnitt aus Quarz, der mit einem Kühlmantel aus Quarz zur Durchleitung eines Kühlmittels versehen ist und im Bereich des Kühlmantels eine gasdurchlässige Füllung für die Anreicherung der flüchtigen Meßprobe enthält, und dem Rohrabschnitt zugeordnete Heizmittel zur Beheizung der Füllung und Verdampfung der flüchtigen Meßprobe.

## ZUGRUNDELIEGENDER STAND DER TECHNIK

Durch die DE-PS 32 26 235 ist es bekannt, in einem Probenmaterial durch Zugabe geeigneter Reaktionspartner eine flüchtige Meßprobe zu erzeugen, zum Beispiel durch Zugabe von Reduktionsmitteln eines oder mehrere flüchtige Hydride von Elementen wie Arsen und anderen. Die flüchtige Meßprobe wird durch einen Trägergasstrom, zum Beispiel einen Schutzgasstrom aufgenommen, der durch eine Trägergasleitung einer Meßanordnung zuführt wird. In der Meßanordnung wird die in dem Trägergasstrom enthaltene flüchtige Meßprobe thermisch zersetzt und die Absorption oder Emission der durch die thermische Zersetzung gebildeten Atome gemessen.

Ein Problem bei dieser bekannten Anordnung besteht darin, daß die flüchtige Meßprobe durch den Trägergasstrom verdünnt wird, wodurch die Empfindlichkeit der Messung erheblich beeinträchtigt wird.

Für eine ähnliche Vorrichtung zur analytischen Bestimmung von flüchtigen Elementen wie Quecksilber ist vorgeschlagen worden, vgl. die am 15. März 1990 veröffentlichte Anmeldung DE-OS 38 30 504.6 der gleichen Anmelderin, die in dem Trägergasstrom enthaltenen Quecksilberdämpfe an einem Goldnetz durch Amalgambildung zu binden. Anschliessend wird das Amalgam durch rasche Erwärmung beispielsweise durch einen Infrarotstrahler thermisch zersetzt, und die Quecksilberdämpfe werden dann in dem Trägergasstrom der Meßanordnung zugeführt. Zusätzlich zu der Aufheizvorrichtung ist eine Kühleinrichtung vorgesehen, um die Trägergasleitung nach dem Ausheizen des Goldnetzes möglichst rasch wieder abzukühlen und dadurch eine hohe Analysenfrequenz zu ermöglichen. Die Kühleinrichtung und die Aufheizvorrichtung können in Bezug auf die Strömungsrichtung des Trägergases hintereinander angeordnet sein, und die Trägergasleitung und die Kühleinrichtung und die Aufheizvorrichtung können relativ zueinander beweglich sein. Es kann aber auch eine stationäre Anordnung vorgesehen werden, bei der die Kühleinrichtung und die Aufheizvorrichtung während der Kühlphase durch eine Abschirmung voneinander getrennt sind. Bei Verwendung ein es Infrarotstrahlers besteht die Trägergasleitung wenigstens im Bereich des Goldnetzes aus für Infrarotstrahlung durchlässigem Material wie Quarzglas.

Nach einer Veröffentlichung von V. Arenas, M. Stoeppler und G. Bergerhoff in "Fresenius Zeitschrift für Analytische Chemie" (1988) 332: 447 bis 452 wird Arsen im Bereich von 0,05 bis 6 ng durch Atomabsorptionsspektroskopie nach dem Hydridverfahren bestimmt, indem die arsenhaltige Probe in einem Hydridreaktor mit Natriumborhydrid unter Zugabe von Säure umgesetzt wird. Das gebildete Arsin wird in einem Heliumstrom aufgenommen, der durch eine Kühlfalle zum Ausfrieren von Wasser getrocknet und nach Zugabe von Wasserstoff durch eine weitere Kühlfalle geleitet wird, die zu einem Atomabsorptionsspektrometer führt. Die Kühlfalle in Form eines U-Rohres wird auf wenigstens -170° C gekühlt und enthält eine Füllung aus silanisierter Quarzwolle, an der das Arsin abgeschieden wird. Die Kühlfalle ist mit einer Heizwicklung versehen und kann in weniger als 10 Sekunden von -180° C auf 200° C erwärmt werden.

Gemäß der Veröffentlichung von J. Piwonka, G. Kaiser und G. Tölg in "Fresenius Zeitschrift für Analytische Chemie" (1985) 324: 225 bis 234 wird Selen im Bereich von 0,006 bis 6 ng durch Atomabsorptionsspektroskopie nach dem Hydridverfahren in der Weise bestimmt, daß die selenhaltige Probe in einem Hydridreaktor mit Natriumborhydrid unter Zugabe von Säure umgesetzt wird. Der gebildete Selenwasserstoff wird in einem Inertgasstrom aufgenommen, der durch einen Aerosolabscheider geleitet wird. Danach tritt der selenwasserstoffhaltige Inertgasstrom durch ein gerades Quarzrohr, das direkt an die Quarzküvette eines Atomabsorptionsspektrometers angeschlossen ist. Ein Abschnitt des geraden Quarzrohres enthält eine Füllung aus silanisiertem Chromosorb W 30/60 (Diatomeenerde-Adsorbens für die Gaschromatographie) oder silanisierter Quarzwolle und ist von einem Aluminiumblock umgeben, der durch flüssigen Stickstoff gekühlt wird. Nach Abschluß der Reaktion wird der gekühlte Aluminiumblock entfernt und der adsorbierte Selenwasserstoff durch Beheizung des Rohrabschnittes mit einem Wasserband oder einem entlang des Quarzrohres verschiebbaren Ofen desorbiert. Als Folge dieser plötzlichen Freisetzung des Selenwasserstoffes werden scharfe peaks und entsprechend höhere Empfindlichkeiten erhalten.

Weiterhin betrifft eine Veröffentlichung von F. Alt, J. Messerschmidt und G. Tölg in "Fresenius Zeitschrift für Analytische Chemie" (1987) 327: 233 bis 234 ein ähnliches System zur Selenbestimmung im pg-Bereich. In diesem System befindet sich der Adsorptionsabschnitt des geraden Quarzrohres in einem elektrisch beheizbaren Stahlrohr, das sich während der Adsorption des gebildeten Selenwasserstoffes in einem mit flüssigem Stickstoff gefüllten Quarzkühler befindet.

Aus der DE-OS 32 33 130 ist ein Verfahren zum Einbringen einer Probensubstanz in feiner Verteilung in eine spektroskopische Anregungsquelle, zum Beispiel eine Flamme oder ein Plasma bekannt, bei dem die Probe auf einem Probenträger in einer Kammer verbrannt oder verdampft wird und die dabei gebildeten feinen Teilchen durch eine Düse in das Ansaugsystem der Anregungsquelle eingesaugt werden. Die Kammer kann durch ein Quarzrohr gebildet werden, in dem ein Probenträger verschiebbar angeordnet ist und durch einen Infrarotstrahler auf die Verbrennungs- bzw. Verdampfungstemperatur der Probe erhitzt werden kann.

## OFFENBARUNG DER ERFINDUNG

Die Aufgabe der vorliegenden Erfindung besteht darin, eine Vorrichtung der eingangs genannten Art anzugeben, welche die Anreicherung der flüchtigen Meßprobe durch Ausfrieren und/oder Adsorption und anschließende Verdampfung in einer besonders kompakten Anordnung unmittelbar in der Trägergas leitung erlaubt.

Diese Aufgabe wird nach der Erfindung dadurch gelöst, daß das Heizmittel von wenigstens einem außerhalb des Kühlmantels angeordneten Infrarotstrahler gebildet ist und der Rohrabschnitt und der Kühlmantel aus für Infrarotstrahlung durchlässigem Quarzglas bestehen.

Es hat sich gezeigt, daß die erfindungsgemäße Vorrichtung eine praktisch verlustlose Abscheidung der flüchtigen Meßprobe aus dem Trägergasstrom erlaubt und die Infrarotstrahlungsheizung eine hinreichend rasche und ebenfalls praktisch verlustlose Verdampfung der abgeschiedenen flüchtigen Meßprobe ermöglicht, um eine erhebliche Anreicherung der flüchtigen Meßprobe im Trägergasstrom zu erreichen, obwohl die Infrarotstrahlung zusätzlich zur Wandung der Trägergasleitung die Wände des Kühlmantels durchsetzen muß.

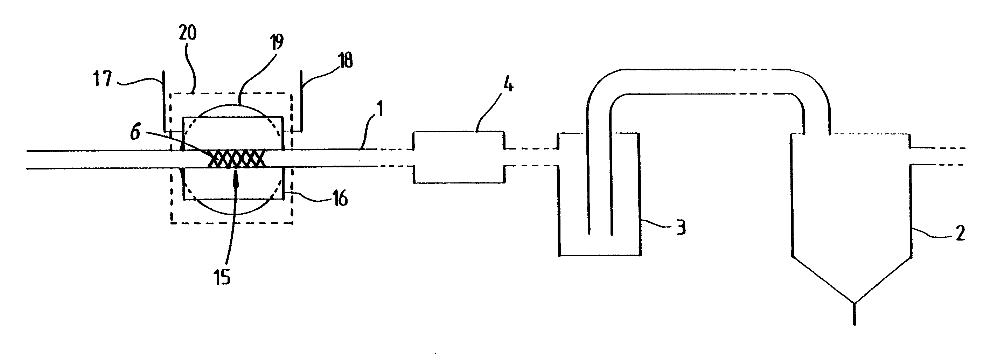

## KURZE BESCHREIBUNG DER ZEICHNUNG

Ein Ausführungsbeispiel der Erfindung ist in der Abbildung schematisch dargestellt und wird nachfolgend anhand der Bezugszeichen im einzelnen erläutert und beschrieben.

## BEVORZUGTE AUSFÜHRUNG DER ERFINDUNG

In der Abbildung des Ausführungsbeispiels der Vorrichtung sind die Einrichtungen zur Erzeugung der flüchtigen Meßproben sowie die Meßanordnungen nicht bzw. nicht im einzelnen dargestellt, da diese kein Teil der Erfindung bilden. Die Einrichtung zur Erzeugung der flüchtigen Meßprobe kann beispielsweise ein Reaktor der Art sein, wie er üblicherweise zur Erzeugung flüchtiger Hydride verwendet wird. Ver schiedene Ausführungen solcher Reaktoren sind in der vorgenannten DE-PS 32 26 235 beschrieben. Anstelle dieser Reaktoren lassen sich aber auch entsprechend ausgebildete andere Reaktoren verwenden, in denen aus einem Probenmaterial flüchtige Meßproben erzeugt und durch einen Trägergasstrom abgetrennt und einer Meßanordnung zugeführt werden gönnen. Die Meßanordnung kann jede Meßanordnung sein, die es erlaubt, eine in einem Trägergasstrom enthaltene flüchtige Meßprobe zu atomisieren und die Absorption oder Emission der so gebildeten Atome zu messen.

Das in der Abbildung schematisch dargestellte Ausführungsbeispiel enthält eine Trägergasleitung 1, die von einem Reaktor 2 ausgeht, der an eine Trägergasquelle beispielsweise für ein Inertgas wie Argon angeschlossen ist. Dem Reaktor 2 können in Durchströmungsrichtung des Trägergases eine Waschvorrichtung 3 und eine Trockenvorrichtung 4 folgen.

Die Trägergasleitung 1 enthält einen Rohrabscbnitt 15 aus infrarotdurchlässigem Quarzglas oder einem anderen geeigneten Material, das für Infrarotstrahlung durchlässig ist. Dieser Rohrabschnitt 15 ist von einem Kühlmantel 16 umgeben, der ebenfalls aus einem für Infrarotstrahlung durchlässigen Material wie Quarzglas besteht. Der Kühlmantel 16 enthält eine Ableitung 18 und ist durch eine Zuleitung 17 an eine Kältequelle anschließbar, durch die ein fluides Kühlmittel durch den Kühlmantel 16 gefördert wird. Das fluide Kühlmittel kann beispielsweise eine im Umlauf geförderte Kühlflüssigkeit oder ein verflüssigtes Gas wie flüssiger Stickstoff sein. Das fluide Kühlmittel kann aber auch durch eine nach dem Joule-Thomson-Effekt arbeitende Kältequelle erzeugt werden.

Dem Rohrabschnitt 15 der Trägergasleitung 1 ist ein Heizmittel aus mindestens einem Infrarotstrahler 19 (zum Beispiel Osram Halogen Bellaphot) zugeordnet. Zum Schutz des Heizmittels während der Kühlung des Rohrabschnittes 15 kann zwischen dem Kühlmantel 16 und dem wenigstens einen Infrarotstrahler 19 ein Schutzschild 20 angeordnet werden.

In einem Rohrabschnitt 15 der Trägergasleitung 1 ist eine beispielsweise netzartig oder sonst gasdurchlässig ausgebildete Füllung 6 aus einem gegenüber der flüchtigen Meßprobe inerten, vorzugsweise gut wärmeleitenden oder wärmeabsorbierenden Material angeordnet. Die gasdurchlässige Füllung 6 kann beispielsweise aus Metall bestehen, aber auch aus einem Adsorbens, insbesondere Aktivkohle.

Zum Betrieb der Vorrichtung wird das Kühlmittel durch den Kühlmantel 16 geleitet, nachdem der Rohrabschnitt 15 mit Trägergas gespült wurde. Dann wird das Probenmaterial in Reaktor 2 unter Bildung der flüchtigen Meßprobe umgesetzt, die von dem Trägergasstrom aufgenommen und, gegebenenfalls nach Passieren der Waschvorrichtung 3 und der Trockenvorrichtung 4, an der gekühlten Füllung 6 in Rohrabschnitt 15 ausgefroren bzw. adsorbiert. Nach der vorgegebenen Reaktionszeit wird der Kühlmittelzufluß unterbrochen und der Rohrabschnitt 15, der die mit der flüchtigen Meßprobe beladene Füllung 6 enthält, der Infrarotstrahlung durch den wenigstens einen Infrarotstrahler 19 durch den Kühlmantel 16 hindurch ausgesetzt und aufgeheizt. Die gute Wärmeleitung bzw. Wärmeabsorption der Füllung 6 stellt dabei sicher, daß eine rasche und auch gleichmäßige Erwärmung der Füllung 6 erfolgt. Die gesamte ausgefrorene bzw. adsorbierte Menge der flüchtigen Meßprobe wird dadurch in vergleichweise sehr kurzer Zeit verdampft bzw. desorbiert und nach Art eines "Pfropfens" von dem Trägergasstrom in die Meßanordnung gefördert, ohne sich vor Erreichen der Meßanordnung auf ein zu großes Trägergasvolumen zu verteilen. Dadurch wird eine hohe Konzentration der flüchtigen Meßprobe im Trägergas und damit auch eine hohe Meßempfindlichkeit erreicht.

Das vorstehend beschriebene Ausführungsbeispiel der Vorrichtung ist vorteilhafterweise so konstruiert, daß sie ohne weiteres mit einer nach dem Amalgamverfahren arbeitenden Vorrichtung kombiniert werden kann.

**Ansprüche**

1. Vorrichtung zur Überführung einer flüchtigen Meßprobe mittels eines Trägergases in die Meßanordnung eines Atomspektrometers, enthaltend eine an eine Trägergasquelle anschließbare Trägergasleitung, die mit der Meßanordnung verbunden ist und durch die hindurch ein Trägergasstrom, der die flüchtige Meßprobe enthält, der Meßanordnung zuführbar ist, einen in der Trägergasleitung enthaltenen Rohrabschnitt aus Quarz, der mit einem Kühlmantel aus Quarz zur Durchleitung eines Kühlmittels versenen ist und im Bereich des Kühlmantels eine gasdurchlässige Füllung für die Anreicherung der flüchtigen Meßprobe enthält, und dem Rohrabschnitt zugeordnete Heizmittel zur Beheizung der Füllung und Verdampfung der flüchtigen Meßprobe,

dadurch gekennzeichnet, daß das Heizmittel von wenigstens einem außerhalb des Kühlmantels (16) angeordneten Infrarotstrahler (19) gebildet ist und der Rohrabschnitt (15) und der Kühlmantel (16) aus für Infrarotstrahlung durchlässigem Quarzglas bestehen.

2. Vorrichtung nach Anspruch 1, dadurch gekennzeichnet, daß die Füllung aus einem gegenüber der flüchtigen Meßprobe inerten, gut wärmeleitenden Material besteht.

3. Vorrichtung nach Anspruch 2, dadurch gekennzeichnet, daß die Füllung aus einem gegenüber der flüchtigen Meßprobe inertem Metall besteht.

4. Vorrichtung nach Anspruch 1, dadurch gekennzeichnet, daß die Füllung aus einem gegenüber der flüchtigen Meßprobe inerten Adsorbens in Form von Aktivkohle besteht.

5. Vorrichtung nach einem der Ansprüche 1 bis 4, dadurch gekennzeichnet, daß zwischen dem wenigstens einen Infrarotstrahler (19) und dem Kühlmantel (16) während der Durchleitung des Kühlmittels ein Schutzschild (20) angeordnet ist.